# EUROPEAN PATENT SPECIFICATION

(11) **EP 3 272 682 B1**
(45) Date of publication and mention of the grant of the patent: **26.06.2019**
(21) Application number: 16382359.4
(22) Date of filing: 22.07.2016
(51) Int. Cl.: B65G 57/00, B65G 57/03

(54) **PALLET HANDLING DEVICE, PALLETIZING APPARATUS AND PALLET HANDLING METHOD**
PALETTENHANDHABUNGSVORRICHTUNG, PALETTIERUNGSVORRICHTUNG UND PALETTENHANDHABUNGSVERFAHREN
DISPOSITIF DE MANIPULATION DE PALETTES, APPAREIL DE PALETTISATION ET PROCÉDÉ DE MANIPULATION DE PALETTES

(43) Date of publication of application: 24.01.2018
(73) Proprietor: Ulma Manutencion, S. Coop., 20560 Onati (ES)
(72) Inventor: ARRIARAN UGARTE, Roberto, 20560 OÑATI (ES)
(74) Representative: Igartua, Ismael

(56) References cited:
- EP-A1- 0 976 671
- EP-A1- 0 999 156
- JP-A- S5 488 573
- JP-U- H0 516 738

## Description

### TECHNICAL FIELD

The present invention relates to a pallet handling device according to the preamble of claim 1, a palletizing apparatus according to the preamble of claim 7 and a pallet handling method according to the preamble of claim 9.

### PRIOR ART

Palletizing apparatus suitable for palletizing single-reference or multi-reference loads on a pallet are known. The different loads can be placed on the pallet manually, by means of an articulated robot or by means of an automatic palletizing device.

Palletizing apparatus are known to comprise a lifting device responsible for lifting an empty pallet to the initial palletizing height and progressively moving said pallet downwards as the different layers of loads are being palletized. The time that elapses from evacuating a loaded pallet to lifting the next empty pallet to the initial palletizing height interrupts the palletizing process. Different solutions that seek to shorten or eliminate said waiting time are known.

Patent document EP2358617A1, for example, discloses a palletizing apparatus comprising a lifting device and two moving flat bars. When the moving flat bars are arranged in a supporting position, they occupy the space corresponding to the pallet to be palletized such that the first loads to be palletized can be placed on said flat bars. When the lifting device lifts a new empty pallet to the palletizing height the flat bars move to an open position, placing the layers of loads previously arranged on said flat bars on said empty pallet.

On the other hand, patent document EP0976671A1 discloses a pallet handling device comprising a first lift configured for progressively moving a pallet being loaded downwards in a vertical path from an initial loading height to a final loading height. The pallet handling device comprises a second lift which is parallel to the vertical path of said first lift, said second lift being configured for lifting an empty pallet from the final loading height to the initial loading height. The pallet handling device also comprises a horizontal displacement unit for moving an empty pallet from the second lift to the vertical path.

Patent document DE102014220046A1 discloses a pallet handling device comprising an empty pallet storage space, said storage space being arranged adjacent to a palletizing case. The empty pallet is lifted to the height of the storage space by means of a main lift. The empty pallet is introduced in the storage space by means of a feeding unit and lifted inside said storage space to the initial loading height. Therefore, along with the evacuation of a loaded pallet and the lifting of the next empty pallet, a support unit supports the pallet introduced by the feeding unit in the palletizing case such that the palletizing process can be initiated. The pallet being loaded is supported by the support unit until the main lift reaches the initial loading height.

Finally, patent document EP0976671A1 discloses a pallet handling device according to the preamble of claim 1, a palletizing apparatus according to the preamble of claim 7 and a pallet handling method according to the preamble of claim 9. It discloses a palletising device defining a vertical path between an initial height and a final height, an intermediate height being disposed between the initial height and the final height. The vertical path defines a pallet loading way and a pallet supply way parallel to said pallet loading way. The palletising device comprises a first lift, a second lift and a fork-lift. The first lift is configured for moving a pallet upwards from the final height to the initial height in the pallet supply way. The second lift is configured for moving a pallet downwards from the intermediate height to the final height in the pallet loading way. The fork-lift is configured for moving an empty pallet horizontally from the pallet supply way to the pallet loading way in the initial height and for moving said pallet downwards from said initial height to the intermediate height until the pallet is supported by the second lift.

### DISCLOSURE OF THE INVENTION

The object of the invention is to provide a pallet handling device, a palletizing apparatus and a pallet handling method, as defined in the claims.

A first aspect of the invention relates to a pallet handling device according to claim 1 for a palletizing apparatus, in the pallet handling device being defined a vertical downward loading path for loading a pallet from an initial pallet loading height to a final pallet loading height. Between said initial loading height and said final loading height there is defined an empty pallet side supplying height for introducing an empty pallet in the vertical path. The pallet handling device comprises a first lift configured for moving the pallet downwards from the initial height to an intermediate height, and a second lift configured for moving said pallet downwards from the intermediate height to the final loading height. The first lift comprises at least one support unit with a support surface configured for supporting the pallet during the downward movement thereof from the initial height to the intermediate height, and for being withdrawn once the pallet is supported on the second lift. The pallet handling device further comprises a storage space for storing an empty pallet. The first lift and the second lift are configured such that the pallet can be simultaneously supported on the first lift and the second lift at the intermediate height, and such that once supported on both lifts, the first lift can be withdrawn, leaving the pallet to keep moving downwards supported on the second lift. The second lift is also configured for lifting the empty pallet from an empty pallet feeding height to the empty pallet side supplying height, the first lift being configured for lifting the empty pallet from the empty pallet side supplying height to the initial pallet loading height.

The pallet handling device also comprises a horizontal displacement unit configured for moving an empty pallet from a horizontal storage position in the storage space to the first lift when said first lift is at the empty pallet side supplying height. The horizontal displacement unit is also configured for moving an empty pallet from the second lift to the horizontal storage position in the storage space when said second lift is at the empty pallet side supplying height.

A second aspect of the invention relates to a palletizing apparatus according to claim 7 comprising a pallet handling device according to claim 1.

A third aspect of the invention relates to a pallet handling method according to claim 9 which can be implemented in a pallet handling device such as the one described above.

The first lift is configured for moving the pallet downwards as the different layers of loads are being created until it reaches the intermediate height, after which point the second lift is in charge of moving said pallet downwards. In this manner, loading of a new pallet in the first lift can be initiated without waiting for the previously loaded pallet to be evacuated from the second lift and for said second lift to move upwards again. Furthermore, it is possible to lift an empty pallet to the empty pallet supplying height by means of the second lift while an empty pallet is being loaded in the first lift. Additionally, since the first lift moves downwards as each layer of loads is being palletized on the pallet, the height at which the loads are placed on the pallet coincides with the initial loading height, providing a solution that is more versatile than the one described in DE102014220046A1, since it can be used with automatic palletizing devices configured for arranging the loads at a fixed height, such as the palletizing device described in patent document EP2692668A1, for example, belonging to the same applicant. Furthermore, it is a better solution from the stability viewpoint since the pallet can be moved downwards as the different layers of loads are being palletized instead of stacking different layers at the initial height.

These and other advantages and features of the invention will become evident in view of the drawings and the detailed description of the invention.

### DESCRIPTION OF THE DRAWINGS

Figure 1 shows a perspective view of the pallet handling device according to one embodiment of the invention, a pallet being arranged at the initial pallet loading height by means of the first lift and an empty pallet being supported on the second lift.
Figure 2 shows a detailed view of Figure 1.
Figure 3 shows a perspective view of the pallet handling device of Figure 1, a pallet being arranged at the initial pallet loading height by means of the first lift and an empty pallet being arranged at the empty pallet side supplying height by means of the second lift.
Figure 4 shows a detailed view of Figure 3.
Figure 5 shows a detailed view of the pallet handling device of Figure 1, the horizontal displacement unit being moved to the vertical path.
Figure 6 shows a detailed view of the pallet handling device of Figure 1, an empty pallet being arranged in the storage space.
Figure 7 shows a perspective view of the pallet handling device of Figure 1, a pallet being loaded being at the intermediate height.
Figure 8 shows a perspective view of the pallet handling device of Figure 1, a loaded pallet being arranged close to the pallet evacuation height and an empty pallet being moved to the vertical path by means of the horizontal displacement unit.
Figure 9 shows a detailed view of Figure 8.
Figure 10 shows a perspective view of the pallet handling device of Figure 1, a loaded pallet being arranged on the evacuating unit and an empty pallet being arranged at the initial pallet loading height.
Figure 11 shows a perspective view of the pallet handling device of Figure 1, a new empty pallet being arranged on the feeding unit.
Figure 12 shows a schematic view of the pallet handling device of Figure 1, a loaded pallet being at the evacuation height supported by the second lift and an empty pallet being arranged in the storage space.
Figure 13 shows a schematic view of the pallet handling device of Figure 1, a loaded pallet being moved towards the evacuating unit by means of the second lift and an empty pallet being arranged in the vertical path supported by the horizontal displacement unit.
Figure 14 shows a schematic view of the pallet handling device of Figure 1, an empty pallet being moved towards the second lift, and a pallet being loaded being at the initial pallet loading height supported by the first lift.
Figure 15 shows a schematic view of the pallet handling device of Figure 1, an empty pallet being at the empty pallet side supplying height supported on the second lift, and a pallet being loaded being supported by the first lift.
Figure 16 shows a schematic view of the pallet handling device of Figure 1, an empty pallet being arranged in a horizontal storage position, and a pallet being loaded being supported by the first lift.
Figure 17 shows a schematic view of the pallet handling device of Figure 1, a pallet being loaded being at the intermediate height simultaneously supported by the first lift and the second lift.
Figure 18 shows a schematic view of the pallet handling device of Figure 1, a pallet being loaded being at the intermediate height supported by the second lift.
Figure 19 shows a detailed view of the pallet handling device of Figure 1, a pallet being simultaneously supported by the first lift and the second lift.
Figure 20 shows a detailed view of the pallet handling device of Figure 1, a pallet being supported by the second lift, and the first lift being arranged in a resting position.
Figure 21 shows a detailed view of the first lift of the pallet handling device of Figure 1.
Figure 22 shows a detailed view of the first lift of the pallet handling device of Figure 1.

### DETAILED DISCLOSURE OF THE INVENTION

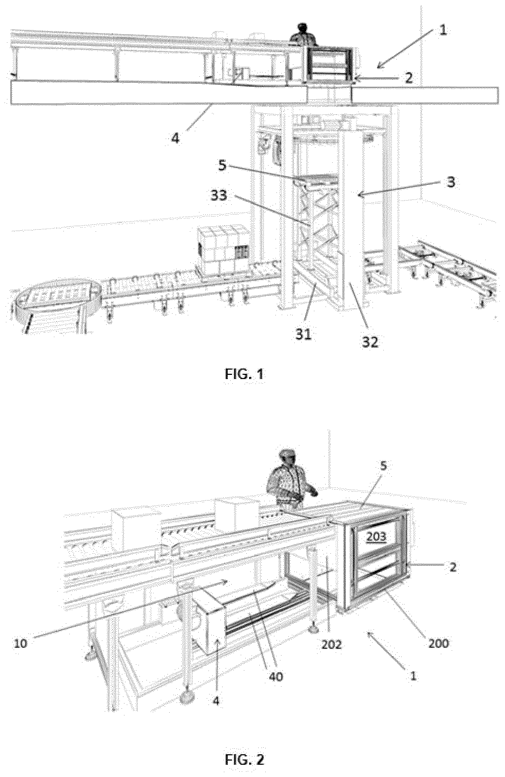

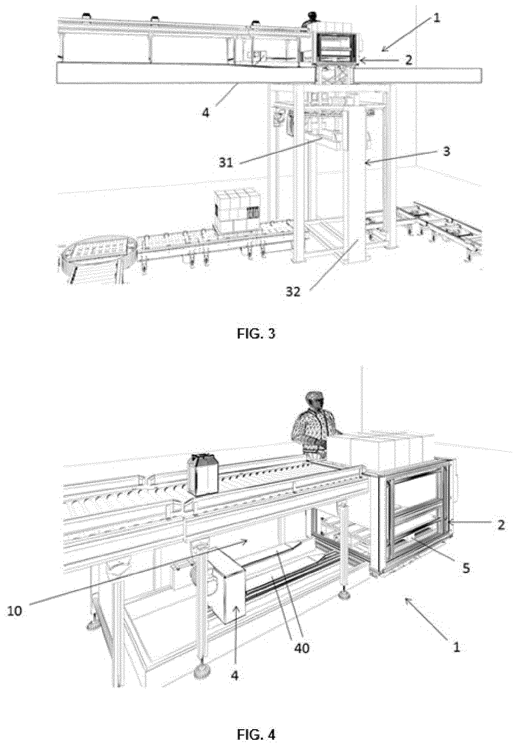

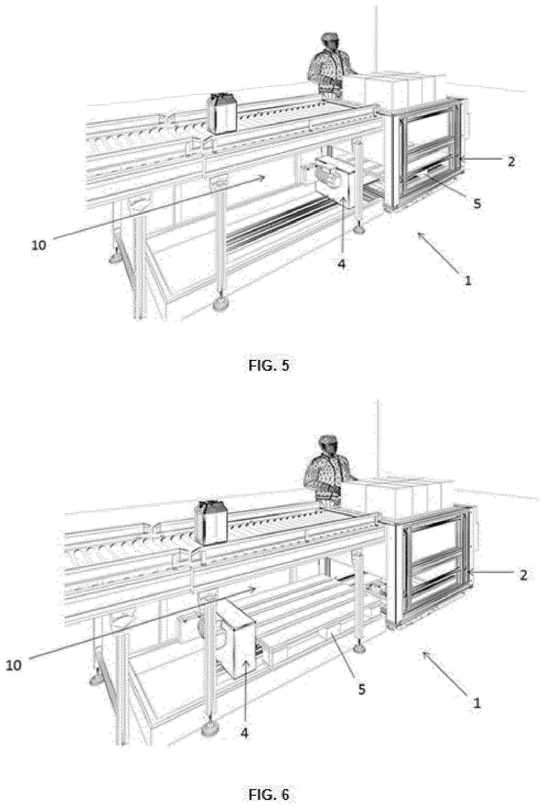

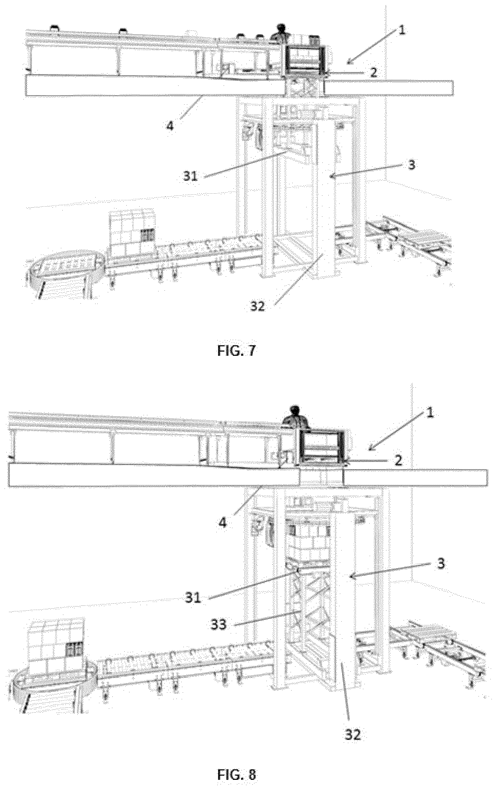

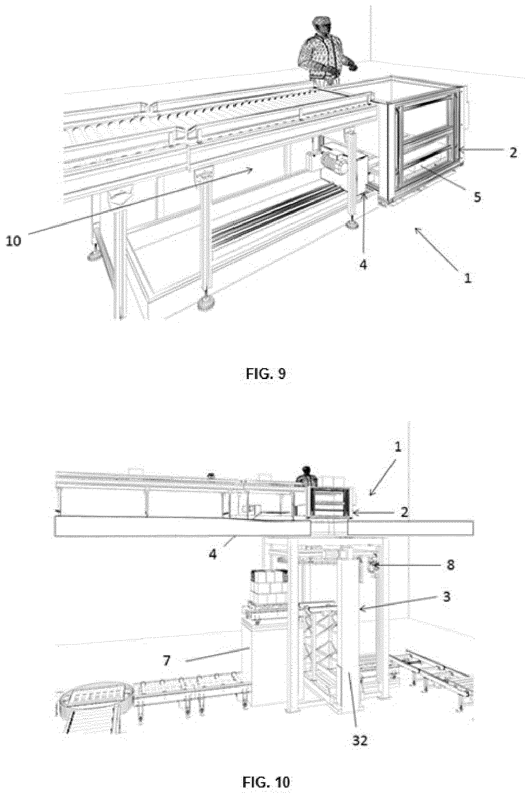

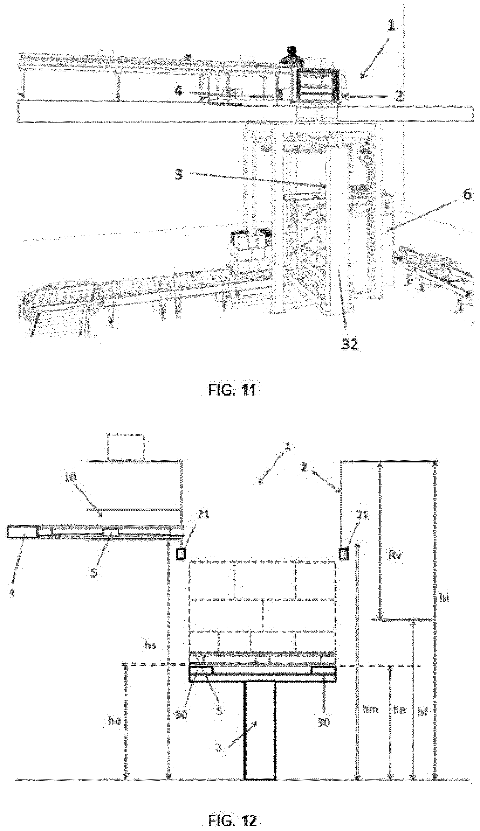

Figures 1 to 11 show one embodiment of the pallet handling device 1 for a palletizing apparatus, the pallet handling device 1 being shown in different positions. Similarly, Figures 12 to 18 schematically show the pallet handling device 1 of said embodiment in different positions.

To understand this description, a loaded pallet will be considered a pallet on which all the intended loads have been placed and loading of said pallet has therefore been completed. Similarly, a pallet being loaded will be considered a pallet on which different loads are being placed or palletized but which loading has not yet been completed. Finally, an empty pallet will be considered a pallet on which a load has not yet been placed.

As shown in Figure 12, there is defined in the pallet handling device 1 a vertical downward loading path Rv for loading a pallet 5 from an initial pallet loading height hi to a final pallet loading height hf. Between the initial height hi and the final loading height hf, there is defined an empty pallet side supplying height hs for introducing an empty pallet 5 in the vertical path Rv.

The pallet handling device 1 comprises a first lift 2 configured for moving a pallet 5 downwards from the initial height hi to an intermediate height hm, and a second lift 3 configured for moving said pallet 5 downwards from the intermediate height hm to the final loading height hf. Both lifts 2 and 3 therefore move within the vertical path RV.

In this embodiment, the intermediate height hm is always the same and coincides with the supplying height hs. In other possible embodiments, the intermediate height could be variable, such that the pallet being loaded will be supported on the second lift when it is available, without having to wait for the pallet being loaded to reach a specific intermediate height. This may be advantageous depending on the types of lifts which are used for the first and second lifts, since the second lift is likely to be more robust than the first lift because, as it is responsible for moving the pallet downwards in the last stretch of loading, it must be suitable for supporting greater loads. In other embodiments, it is also possible for the intermediate height to be fixed but not coinciding with the supplying height.

A pallet 5 is a frame used for moving a load because it makes lifting and handling with small hydraulic hoisting apparatus easier. A pallet 5 comprises an upper support surface 50 on which the loads to be palletized are arranged. A pallet 5 also comprises two longitudinal openings 51 parallel to one another in which the fork-like arms of a hoisting apparatus, for example, can be introduced to move the pallet 5. A pallet 5 further comprises two lower longitudinal side support surfaces 52 and a lower longitudinal central support surface.

The first lift 2 comprises at least one support unit 21 with a support surface configured for supporting the pallet 5 during the downward movement thereof from the initial height hi to the intermediate height hm and for being withdrawn once the pallet 5 is supported on the second lift 3. Said at least one support unit 21 can be withdrawn by pivoting or it can be retractable.

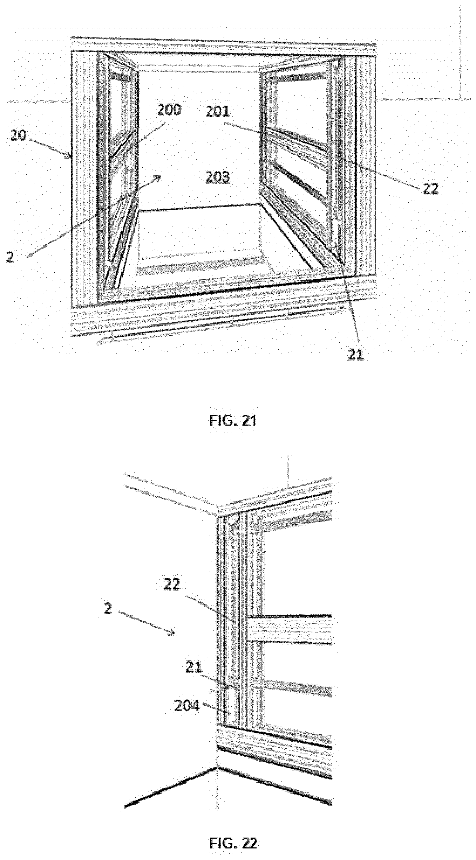

Figures 21 and 22 show the first lift 2 of this embodiment in detail.

In this embodiment, the first lift 2 comprises a plurality of support units 21, each support unit 21 comprising a support surface suitable for supporting a pallet 5. The first lift 2 comprises a structure 20 with a front wall 200 and a rear wall 201 arranged parallel facing one another, and a left side wall 203 and a right side wall 202 arranged parallel facing one another and perpendicular to the front wall 200 and rear wall 201. The walls 200, 201, 202 and 203 of the structure 20 of the first lift 2 give stability to the pallet 5 being loaded.

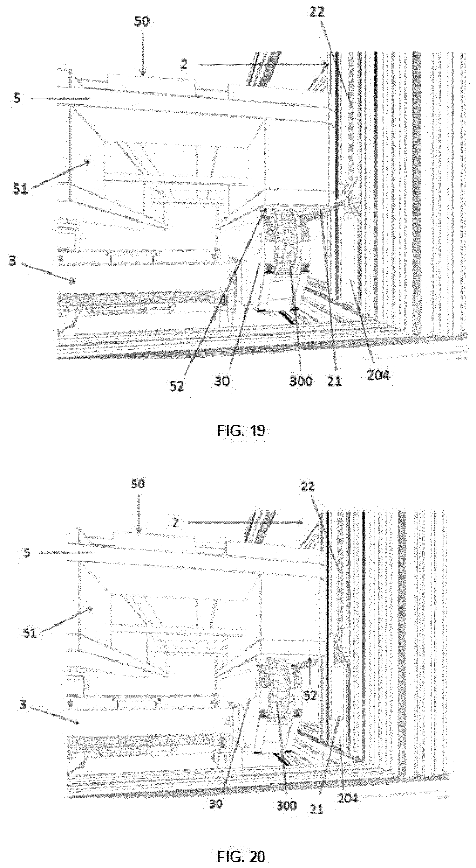

A drive chain 22 in which a respective support unit 21 is fixed is arranged on each longitudinal side of the front wall 200 and the rear wall 201. Each support unit 21 is therefore configured for supporting a pallet 5 in the proximity of each of the corners thereof, as seen in Figure 19.

Each drive chain 22 comprises an upper drive pulley and a lower drive pulley, the lower drive pulley being arranged at a height such that it causes the respective support unit 21 to be pivoted when it moves below the intermediate height hm, as shown in Figure 20, thereby allowing the pallet 5 to be moved downwards by means of the second lift 3 from said intermediate height hm. The front wall 200 and the rear wall 201 comprise a cavity 204 on each longitudinal side after the respective drive chain 22. Therefore, when pivoted the support units 21 are housed in said cavities 204, such that they do not obstruct the downward movement of the corresponding pallet 5.

The second lift 3 is preferably a conventional lift used in palletizing apparatus, i.e., a lift of the type already in use in pallet handling devices comprising a single lift. In this embodiment, the second lift 3 comprises a conveyor 30 driven by chains 300. Therefore, in addition to supporting a pallet 5 the conveyor 30 can move said pallet 5 in a horizontal direction while arranging an empty pallet 5 on the second lift 3 and evacuating a loaded pallet 5 from the second lift 3. The second lift 3 further comprises a moving base 31 movably coupled to a column 32. The conveyor 30 is fixed to the moving base 31 by means of a lifting structure 33. In other possible embodiments, instead of using a conveyor driven by chains a roller conveyor can be used.

Figure 19 shows how the pallet 5 being loaded is simultaneously supported on the first lift 2 and second lift 3 when it reaches the intermediate height hm. Specifically, the lower longitudinal side support surfaces 52 of the pallet 5 being loaded are what is being supported on the support units 21 of the first lift 2 and on the conveyor 30 of the second lift 3. Both lifts 2 and 3 are sized such that the conveyor 30 of the second lift 3 and the support units 21 of the first lift 2 do not overlap. Therefore, when the pallet 5 is supported on both lifts 2 and 3, the support units 21 are pivoted, as seen in Figure 20, such that they do not obstruct the vertical path Rv, the pallet 5 being able to keep moving downwards supported on the second lift 3.

In other possible embodiments, the first lift and the second lift can be of any other type known by the person skilled in the art, provided that the pallet being loaded can be simultaneously supported on both lifts at the intermediate height, and that once supported on both lifts, the first lift can be withdrawn, leaving the pallet being loaded to keep moving downwards supported on the second lift.

According to the invention, in addition to being responsible for moving the pallet 5 being loaded downwards, the first lift 2 and the second lift 3 are responsible for lifting the empty pallet 5. Like in the downward movement, the upward movement of the empty pallet 5 is performed in two steps. The second lift 3 is responsible for lifting the empty pallet 5 from the empty pallet feeding height ha to the empty pallet side supplying height hs. In addition, the first lift 2 is responsible for lifting the empty pallet 5 from the empty pallet side supplying height hs to the initial pallet loading height hi.

The combination of the first lift 2 and the second lift 3 of the pallet handling device 1 therefore allows managing the pallets 5 quickly, such that it is not required to wait for the second lift 3 to evacuate a loaded pallet 5 and lift an empty pallet 5 but rather while a loaded pallet 5 is being evacuated, it is the first lift 2 itself which lifts an empty pallet 5 at the same time to the initial loading height hi, obtaining a system with less discontinuity. Since both lifts are arranged in the vertical path Rv, a compact solution is provided.

According to the invention, the pallet handling device 1 comprises a storage space 10 for storing an empty pallet. The storage space 10 is arranged contiguous to the left side wall 203 of the structure 20 of the first lift 2. The storage space 10 of this embodiment is suitable for storing an empty pallet 5.

According to the invention, the pallet handling device 1 comprises a horizontal displacement unit 4 configured for horizontally moving an empty pallet 5 between the vertical path Rv and a horizontal storage position of an empty pallet 5. The horizontal displacement unit 4 can therefore move between the storage space 10 and the vertical path Rv.

The horizontal displacement unit 4 of this embodiment comprises two arms 40 arranged parallel to one another like a fork, and configured for being introduced in the longitudinal openings 51 of a pallet 5. When the second lift 3 lifts an empty pallet 5 to the supplying height hs, the horizontal displacement unit 4 moves to the vertical path Rv, introducing its arms 40 in the longitudinal openings 51 of the empty pallet 5. Preferably, once the arms 40 of the horizontal displacement unit 4 are introduced in the longitudinal openings 51 of the pallet 5, the second lift 3 is configured for moving downwards enough so that the pallet 5 is only supported on the arms 40 of the horizontal displacement unit 4. As the horizontal displacement unit 4 moves back to the storage space 10, the empty pallet 5 will also move to the horizontal storage position. Similarly, when it is required to again introduce said empty pallet 5 in the vertical path Rv so that the first lift 2 can lift it to the initial loading height hi, the horizontal displacement unit 4 will move the empty pallet 5 from the horizontal storage position to the vertical path Rv.

In other possible embodiments, the empty pallets can be fed at the supplying height, such that it would not be necessary for the second lift to lift them to said height. Similarly, any other device can be used for moving the empty pallet to the vertical path. In this embodiment, the second lift 3 moves the loaded pallet 5 downwards from the final loading height hf to a loaded pallet evacuation height he. In other embodiments, the final loading height can coincide with the evacuation height.

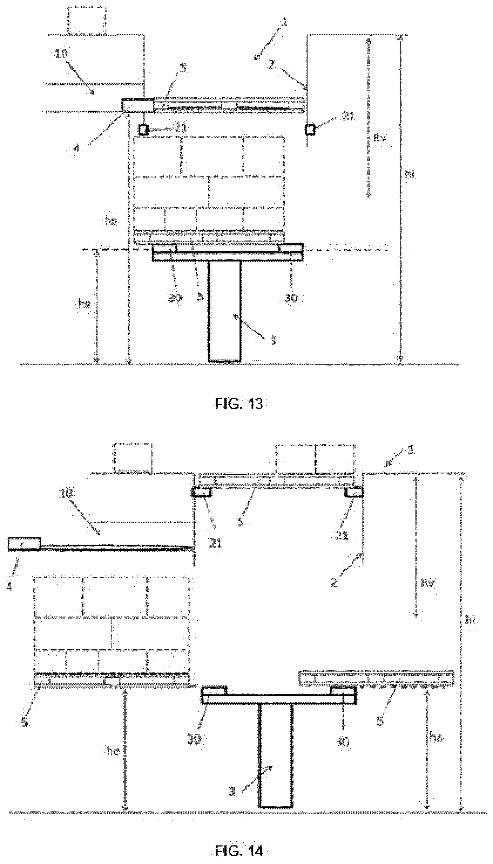

In this embodiment, as seen in Figure 14 the empty pallet feeding height ha and the evacuation height he are the same. On one side of the second lift 3 there is arranged an empty pallet feeding unit 6 comprising a roller conveyor which is lifted to the empty pallet feeding height ha to move an empty pallet 5 to the second lift 3. On the opposite side of the second lift 3 there is arranged a loaded pallet evacuating unit 7 comprising a roller conveyor which is lifted to the evacuation height he to move a loaded pallet 5 to the outlet of the palletizing apparatus. In other possible embodiments, the empty pallet feeding unit can be fixed at the pallet feeding height, such that it does not have to move vertically. Similarly, the loaded pallet evacuating unit can be fixed at the pallet evacuation height he, such that it does not have to move vertically.

In this embodiment, a bundling unit 8 is arranged around the second lift 3 such that as the pallet 5 being loaded moves downwards supported on said second lift 3 the bundling unit 8 bundles the pallet 5 being loaded. The stability of the pallet 5 being loaded or the loaded pallet 5 therefore improves.

The invention also relates to a palletizing apparatus comprising a pallet handling device 1 according to claim 1 as described above. The palletizing apparatus preferably comprises automatic load positioning means such as those described in patent document EP2692668A1, for example, belonging to the same applicant, which is incorporated by reference. Said automatic positioning means allow arranging loads on the pallet 5 from when said pallet 5 is at the initial loading height hi until the pallet 5 moves downwards to the final loading height hf.

The pallet handling method according to the invention for loading pallets 5 along a vertical downward path Rv from an initial pallet loading height hi to a final pallet loading height hf is described below, there being defined between said initial loading height hi and said final loading height hf an empty pallet side supplying height hs for introducing an empty pallet 5 in the vertical path Rv.

The handling method comprises a first step of moving the pallet 5 downwards from the initial height hi to an intermediate height hm by means of a first lift 2, and a second step of moving said pallet 5 downwards from the intermediate height hm to the final loading height hf by means of a second lift 3.

The method of the invention comprises a step of supplying an empty pallet 5 to the first lift 2 at the empty pallet side supplying height hs from a horizontal storage position, and a successive step of lifting the empty pallet 5 from the empty pallet side supplying height hs to the initial loading height hi by means of the first lift 2, the first step of moving the pallet 5 downwards being initiated after said step of lifting. The method also preferably comprises a step of lifting an empty pallet 5 from an empty pallet feeding height ha to the empty pallet side supplying height hs by means of the second lift 3 and a successive step of moving the empty pallet 5 horizontally to the horizontal storage position. Both steps are carried out simultaneously with at least part of the step of supplying an empty pallet 5 to the first lift 2, the successive step of lifting the empty pallet 5 to the initial height hi and/or the first step of moving the pallet 5 downwards from the initial height hi, thereby providing a continuous loading process.

Finally, in this embodiment the handling method comprises a step of moving a loaded pallet downwards from the final loading height hf to the pallet evacuation height he by means of a second lift 3.

The sequence of steps according to this embodiment is explained below in reference to the schematic drawings.

Figure 12 shows a situation in which a loaded pallet 5 is arranged at the evacuation height he supported on the second lift. Furthermore, an empty pallet 5 is stored in the storage space 10.

Figure 13 shows how the empty pallet is moved to the vertical path by means of the horizontal displacement unit 4, at the same time the loaded pallet 5 is being evacuated onto the evacuating unit by means of the conveyor of the second lift 3.

Figure 14 shows how the first lift 2 has lifted the pallet 5 to the initial height hi and the first loads are being placed on said pallet 5. At the same time, a new empty pallet 5 is being moved towards the second lift 3.

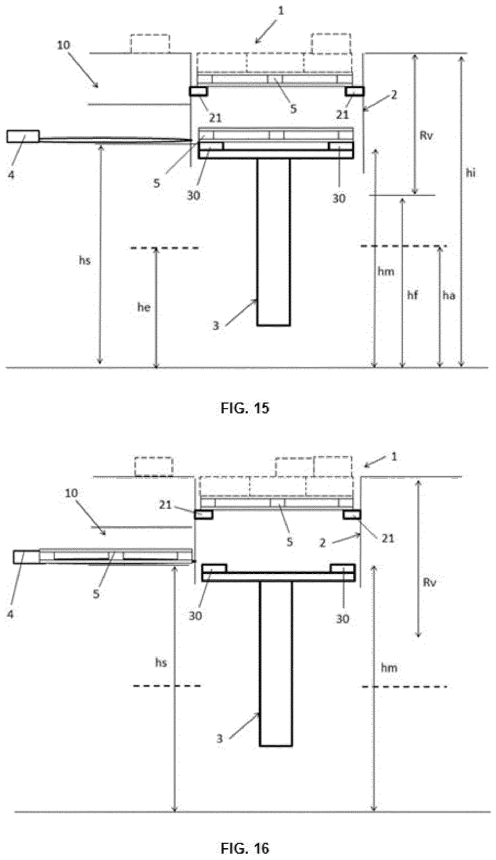

Figure 15 shows how the first lift 2 has moved the pallet being loaded downwards because the first layer of loads has been completed. At the same time, the second lift 3 has lifted a new empty pallet 5 to the empty pallet side supplying height hs.

Figure 16 shows how the horizontal displacement unit has introduced the new empty pallet 5 to the storage space, while loads are continuously being placed on the pallet 5 being loaded supported on the first lift 2.

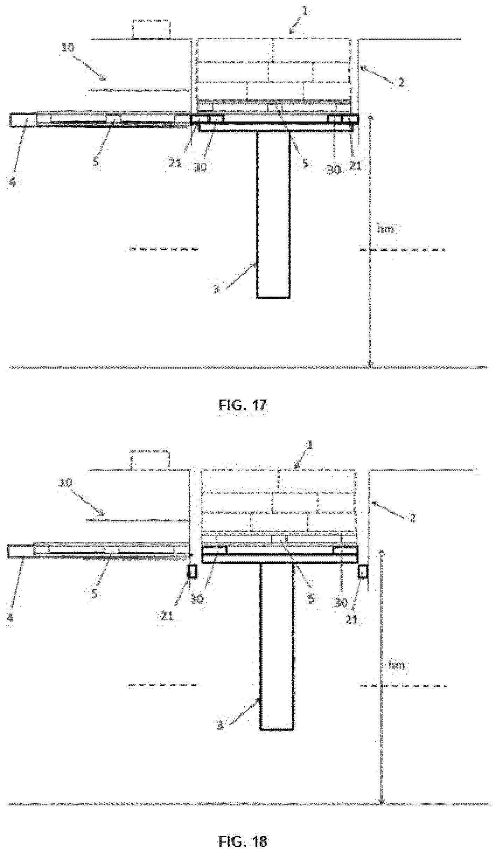

Figure 17 shows that the pallet 5 being loaded has reached the intermediate height hm and is supported on both lifts 2 and 3.

Figure 18 shows how the support units 21 of the first lift 2 have moved to a resting position, such that the loaded pallet is only supported on the second lift, the second lift being responsible for moving said pallet 5 downwards to the evacuation height, as shown in Figure 12.

## Claims

1. Pallet handling device for a palletizing apparatus, in the pallet handling device being defined a vertical downward path (Rv) for loading a pallet (5) from an initial pallet loading height (hi) to a final pallet loading height (hf), and there being defined between said initial loading height (hi) and said final loading height (hf) an empty pallet side supplying height (hs) for introducing an empty pallet (5) in the vertical path (Rv), the pallet handling device comprising a first lift (2) configured for moving the pallet (5) downwards from the initial height (hi) to an intermediate height (hm), and a second lift (3) configured for moving said pallet (5) downwards from the intermediate height (hm) to the final loading height (hf), wherein the first lift (2) comprises at least one support unit (21) with a support surface configured for supporting the pallet (5) during the downward movement thereof from the initial height (hi) to the intermediate height (hm), and for being withdrawn once the pallet (5) is supported on the second lift (3), the pallet handling device further comprising a storage space (10) for storing an empty pallet (5), wherein the first lift (2) and the second lift (3) are configured such that the pallet (5) can be simultaneously supported on the first lift (2) and the second lift (3) at the intermediate height (hm), and such that once supported on both lifts (2, 3), the first lift (2) can be withdrawn, leaving the pallet (5) to keep moving downwards supported on the second lift (3), the pallet handling device comprising a horizontal displacement unit (4), **characterized in that** said horizontal displacement unit (4) is configured for moving an empty pallet (5) from a horizontal storage position in the storage space (10) to the first lift (2) when said first lift (2) is at the empty pallet side supplying height (hs), wherein the horizontal displacement unit (4) is also configured for moving an empty pallet (5) from the second lift (3) to the horizontal storage position in the storage space (10) when said second lift (3) is at the empty pallet side supplying height (hs), the second lift (3) being configured for lifting the empty pallet (5) from an empty pallet feeding height (ha) to the empty pallet side supplying height (hs), and the first lift (2) being configured for lifting the empty pallet (5) from the empty pallet side supplying height (hs) to the initial pallet loading height (hi).

2. Pallet handling device according to claim 1, wherein the first lift (2) comprises a structure (20) comprising two walls (200, 201) facing one another, one of said 35 support units (21) being arranged on each longitudinal side of said walls (200, 201), the support surface of each of said support units (21) being configured for supporting a pallet (5) in the proximity of each of the corners thereof.

3. Pallet handling device according to claim 1 or 2, wherein each support unit (21) is 5 fixed to a respective drive chain (22).

4. Pallet handling device according to claim 3, wherein each drive chain (22) comprises an upper drive pulley and a lower drive pulley, the lower drive pulley being arranged at a height such that it causes the respective support unit (21) to 10 be pivoted when it moves below the intermediate height (hm), thereby allowing the pallet (5) to be moved downwards by means of the second lift (3) from said intermediate height (hm).

5. Pallet handling device according to any of the preceding claims, wherein the 15 second lift (3) is a conventional lift.

6. Pallet handling device according to any of the preceding claims, wherein the horizontal displacement unit (4) comprises two arms (40) arranged parallel to one another like a fork, and configured for being introduced in the longitudinal openings (51) of a pallet (5), said arms (40) being horizontally movable.

7. Palletizing apparatus **characterized in that** it comprises a pallet handling device (1) according to any of claims 1 to 6.

8. Palletizing apparatus according to claim 7, comprising automatic positioning means for positioning loads on a pallet (5) from when said pallet (5) is at the initial loading height (hi) until the pallet (5) moves downwards to the final loading height (hf).

9. Pallet handling method for loading pallets along a vertical downward loading path (Rv) from an initial pallet loading height (hi) to a final pallet loading height (hf), there being defined between said initial loading height (hi) and said final loading height (hf) an empty pallet side supplying height (hs) for introducing an empty pallet (5) in the vertical path (Rv), the handling method comprising a first step of moving the pallet (5) downwards from the initial height (hi) to an intermediate height (hm) by means of a first lift (2), and a second step of moving said pallet (5) downwards from the intermediate height (hm) to the final loading height (hf) by means of a second lift (3), wherein the first lift (2) and the second lift (3) are configured such that the pallet (5) can be simultaneously supported on the first lift (2) and the second lift (3) at the intermediate height (hm), and such that once supported on both lifts (2, 3), the first lift (2) can be withdrawn, leaving the pallet (5) to keep moving downwards supported on the second lift (3), the handling method further comprising a step of supplying an empty pallet (5) to the first lift (2) at the empty pallet side supplying height (hs) from a horizontal storage position in a storage space (10) for storing an empty pallet (5), **characterized in that** said empty pallet (5) is supplied to the first lift (2) by means of a horizontal displacement unit (4), followed by a successive step of lifting the empty pallet (5) from the empty pallet side supplying height (hs) to the initial loading height (hi) by means of the first lift (2), the first step of moving the pallet (5) downwards being initiated after said step of lifting, the handling method further comprising a step of lifting an empty pallet (5) from an empty pallet feeding height (ha) of an empty pallet feeding unit (6) to the empty pallet side supplying height (hs) by means of the second lift (3) and a successive step of moving the empty pallet (5) horizontally to the horizontal storage position in the storage space (10), both steps being carried out simultaneously with at least part of the step of supplying an empty pallet (5) to the first lift (2), the successive step of lifting the empty pallet (5) to the initial height (hi) and/or the first step of moving the pallet (5) downwards from the initial height (hi).

10. Handling method according to claim 9, comprising a step of moving a loaded pallet (5) downwards from the final loading height (hf) to the pallet evacuation height (he) by means of the second lift (3).

## Patentansprüche

1. Palettenhandhabungsvorrichtung für eine Palettierungsvorrichtung, wobei in der Palettenhandhabungsvorrichtung ein vertikaler Abwärtsweg (Rv) zum Laden einer Palette (5) von einer anfänglichen Palettenladehöhe (hi) zu einer endgültigen Palettenladehöhe (hf) definiert ist, und wobei zwischen der genannten anfänglichen Ladehöhe (hi) und der genannten endgültigen Ladehöhe (hf) eine seitliche Zuführungshöhe (hs) zum Zuführen einer leeren Palette zum Einführen einer leeren Palette (5) im vertikalen Weg (Rv) definiert ist, wobei die Palettenhandhabungsvorrichtung eine erste Hebevorrichtung (2), welche dazu ausgebildet ist, die Palette (5) nach unten von der anfänglichen Höhe (hi) zu einer Zwischenhöhe (hm) zu bewegen, und eine zweite Hebevorrichtung (3), welche dazu ausgebildet ist, die genannte Palette (5) nach unten von der Zwischenhöhe (hm) zur endgültigen Ladehöhe (hf) zu bewegen, umfasst, wobei die erste Hebevorrichtung (2) mindestens eine Stützeinheit (21) mit einer Stützfläche umfasst, welche dazu ausgebildet ist, die Palette (5) während der Abwärtsbewegung derselben von der anfänglichen Höhe (hi) zur Zwischenhöhe (hm) zu stützen, und zurückgezogen zu werden, sobald die Palette (5) auf der zweiten Hebevorrichtung (3) gestützt ist, wobei die Palettenhandhabungsvorrichtung zusätzlich einen Speicherraum (10) zum Speichern einer leeren Palette (5) umfasst, wobei die erste Hebevorrichtung (2) und die zweite Hebevorrichtung (3) derart ausgebildet sind, dass die Palette gleichzeitig auf der ersten Hebevorrichtung (2) und der zweiten Hebevorrichtung (3) in der Zwischenhöhe (hm) gestützt werden kann, und derart, dass, sobald sie auf beiden Hebevorrichtungen (2, 3) gestützt ist, die erste Hebevorrichtung (2) zurückgezogen werden kann, so dass der Palette (5) erlaubt wird, sich weiter nach unten auf der zweiten Hebevorrichtung (3) gestützt zu bewegen, wobei die Palettenhandhabungsvorrichtung eine horizontale Verschiebeeinheit (4) umfasst, **dadurch gekennzeichnet, dass** die genannte horizontale Verschiebeeinheit (4) dazu ausgebildet ist, eine leere Palette (5) von einer horizontalen Speicherstellung im Speicherraum (10) zur ersten Hebevorrichtung (2) zu bewegen, wenn sich die genannte erste Hebevorrichtung (2) in der seitlichen Zuführungshöhe (hs) zum Zuführen einer leeren Palette befindet, wobei die horizontale Verschiebeeinheit (4) auch dazu ausgebildet ist, eine leere Palette (5) von der zweiten Hebevorrichtung (3) zur horizontalen Speicherstellung im Speicherraum (10) zu bewegen, wenn sich die genannte zweite Hebevorrichtung (3) in der seitlichen Zuführungshöhe (hs) zum Zuführen einer leeren Palette befindet, wobei die zweite Hebevorrichtung (3) dazu ausgebildet ist, die leere Palette (5) von einer Einspeisehöhe (ha) zum Einspeisen einer leeren Palette zur seitlichen Zuführungshöhe (hs) zum Zuführen einer leeren Palette zu heben, und wobei die erste Hebevorrichtung (2) dazu ausgebildet ist, die leere Palette (5) von der seitlichen Zuführungshöhe (hs) zum Zuführen einer leeren Palette zur anfänglichen Palettenladehöhe (hi) zu heben.

2. Palettenhandhabungsvorrichtung nach Anspruch 1, wobei die erste Hebevorrichtung (2) eine Struktur (20) umfasst, welche zwei zueinander zugewandte Wände (200, 201) umfasst, wobei eine der genannten Stützeinheiten (21) auf jeder Längsseite der genannten Wände (200, 201) angeordnet ist, wobei die Stützfläche jeder der genannten Stützeinheiten (21) dazu ausgebildet ist, eine Palette (5) in der Nähe jeder der Ecken derselben zu stützen.

3. Palettenhandhabungsvorrichtung nach Anspruch 1 oder 2, wobei jede Stützeinheit (21) an einer jeweiligen Antriebskette (22) befestigt ist.

4. Palettenhandhabungsvorrichtung nach Anspruch 3, wobei jede Antriebskette (22) eine obere Antriebsscheibe und eine untere Antriebsscheibe umfasst, wobei die untere Antriebsscheibe in einer Höhe angeordnet ist, in der sie die jeweilige Stützeinheit (21) zum Verschwenken bringt, wenn sie sich unter der Zwischenhöhe (hm) bewegt, so dass der Palette (5) erlaubt wird, sich nach unten mittels der zweiten Hebevorrichtung (3) von der genannten Zwischenhöhe (hm) zu bewegen.

5. Palettenhandhabungsvorrichtung nach einem der vorhergehenden Ansprüche, wobei die zweite Hebevorrichtung (3) eine herkömmliche Hebevorrichtung ist.

6. Palettenhandhabungsvorrichtung nach einem der vorhergehenden Ansprüche, wobei die horizontale Verschiebeeinheit (4) zwei Arme (40) umfasst, welche parallel zueinander gabelartig angeordnet sind, und dazu ausgebildet sind, in die länglichen Öffnungen (51) einer Palette (5) eingeführt zu werden, wobei die genannten Arme (40) horizontal beweglich sind.

7. Palettierungsvorrichtung, **dadurch gekennzeichnet, dass** sie eine Palettenhandhabungsvorrichtung (1) nach einem der Ansprüche 1 bis 6 umfasst.

8. Palettierungsvorrichtung nach Anspruch 7, umfassend automatische Positionierungsmittel zum Positionieren von Ladungen auf einer Palette (5) vom Moment an in welchem sich die genannte Palette (5) in der anfänglichen Ladehöhe (hi) befindet, bis sich die Palette (5) nach unten zur endgültigen Ladehöhe (hf) bewegt.

9. Palettenhandhabungsverfahren zum Laden von Paletten entlang eines vertikalen Abwärtsladewegs (Rv) von einer anfänglichen Palettenladehöhe (hi) zu einer endgültigen Palettenladehöhe (hf), wobei zwischen der genannten anfänglichen Ladehöhe (hi) und der genannten endgültigen Ladehöhe (hf) eine seitliche Zuführungshöhe (hs) zum Zuführen einer leeren Palette zum Einführen einer leeren Palette (5) im vertikalen Weg (Rv) definiert ist, wobei das Handhabungsverfahren einen ersten Schritt des Bewegens der Palette (5) nach unten von der anfänglichen Höhe (hi) zu einer Zwischenhöhe (hm) mittels einer ersten Hebevorrichtung (2), und einen zweiten Schritt des Bewegens der genannten Palette (5) nach unten von der Zwischenhöhe (hm) zur endgültigen Ladehöhe (hf) mittels einer zweiten Hebevorrichtung (3) umfasst, wobei die erste Hebevorrichtung (2) und die zweite Hebevorrichtung (3) derart ausgebildet sind, dass die Palette gleichzeitig auf der ersten Hebevorrichtung (2) und der zweiten Hebevorrichtung (3) in der Zwischenhöhe (hm) gestützt werden kann, und derart, dass, sobald sie auf beiden Hebevorrichtungen (2, 3) gestützt ist, die erste Hebevorrichtung (2) zurückgezogen werden kann, so dass der Palette (5) erlaubt wird, sich weiter nach unten auf der zweiten Hebevorrichtung (3) gestützt zu bewegen, wobei das Handhabungsverfahren zusätzlich einen Schritt des Zuführens einer leeren Palette (5) zur ersten Hebevorrichtung (2) in der seitlichen Zuführungshöhe (hs) zum Zuführen einer leeren Palette von einer horizontalen Speicherstellung in einem Speicherraum (10) zum Speichern einer leeren Palette (5) umfasst, **dadurch gekennzeichnet, dass** die genannte leere Palette (5) der ersten Hebevorrichtung (2) mittels einer horizontalen Verschiebeeinheit (4) zugeführt wird, gefolgt von einem nachfolgenden Schritt des Hebens der leeren Palette (5) von der seitlichen Zuführungshöhe (hs) zum Zuführen einer leeren Palette zur anfänglichen Ladehöhe (hi) mittels der ersten Hebevorrichtung (2), wobei der erste Schritt des Bewegens der Palette (5) nach unten nach dem genannten Schritt des Hebens eingeleitet wird, wobei das Handhabungsverfahren zusätzlich einen Schritt des Hebens einer leeren Palette (5) von einer Einspeisehöhe (ha) zum Einspeisen einer leeren Palette einer Einspeiseeinheit (6) zum Einspeisen einer leeren Palette zur seitlichen Zuführungshöhe (hs) zum Zuführen einer leeren Palette mittels der zweiten Hebevorrichtung (3) und einen nachfolgenden Schritt des horizontalen Bewegens der leeren Palette (5) zur horizontalen Speicherstellung im Speicherraum (10) umfasst, wobei beide Schritte gleichzeitig mit mindestens einem Teil des Schrittes des Zuführens einer leeren Palette (5) zur ersten Hebevorrichtung (2), dem nachfolgenden Schritt des Hebens der leeren Palette (5) zur anfänglichen Höhe (hi) und/oder dem ersten Schritt des Bewegens der Palette (5) nach unten von der anfänglichen Höhe (hi) durchgeführt werden.

10. Handhabungsverfahren nach Anspruch 9, umfassend einen Schritt des Bewegens einer geladenen Palette (5) nach unten von der endgültigen Ladehöhe (hf) zur Palettenentleerungshöhe (he) mittels der zweiten Hebevorrichtung (3).

## Revendications

1. Dispositif de manipulation de palettes pour un appareil de palettisation, dans le dispositif de manipulation de palettes étant définie une trajectoire verticale descendante (Rv) pour charger une palette (5) d'une hauteur initiale de chargement de palettes (hi) à une hauteur finale de chargement de palettes (hf), et en étant définie entre ladite hauteur initiale de chargement (hi) et ladite hauteur finale de chargement (hf) une hauteur de fourniture latérale de palettes vides (hs) pour introduire une palette vide (5) dans la trajectoire verticale (Rv), le dispositif de manipulation de palettes comprenant un premier élévateur (2) configuré pour déplacer la palette (5) vers le bas depuis la hauteur initiale (hi) à une hauteur intermédiaire (hm), et un second élévateur (3) configuré pour déplacer ladite palette (5) vers le bas depuis la hauteur intermédiaire (hm) à la hauteur finale de chargement (hf), dans lequel le premier élévateur (2) comprend au moins une unité de support (21) avec une surface de support configurée pour supporter la palette (5) pendant son mouvement descendant depuis la hauteur initiale (hi) à la hauteur intermédiaire (hm), et pour être retirée une fois que la palette (5) est supportée sur le second élévateur (3), le dispositif de manipulation de palettes comprenant en outre un espace de stockage (10) pour stocker une palette vide (5), dans lequel le premier élévateur (2) et le second élévateur (3) sont configurés de manière que la palette (5) peut être supportée simultanément sur le premier élévateur (2) et le second élévateur (3) à la hauteur intermédiaire (hm), et de manière qu'une fois supportée sur les deux élévateurs (2, 3), le premier élévateur (2) peut être retirée, en laissant la palette (5) continuer à se déplacer vers le bas supportée sur le second élévateur (3), le dispositif de manipulation de palettes comprenant une unité de déplacement horizontal (4), **caractérisé en ce que** ladite unité de déplacement horizontal (4) est configurée pour déplacer une palette vide (5) depuis une position de stockage horizontale dans l'espace de stockage (10) au premier élévateur (2) lorsque ledit premier élévateur (2) est à la hauteur de fourniture latérale de palettes vides (hs), dans lequel l'unité de déplacement horizontal (4) est également configurée pour déplacer une palette vide (5) depuis le second élévateur (3) à la position de stockage horizontal dans l'espace de stockage (10) lorsque ledit second élévateur (3) est à la hauteur de fourniture latérale de palettes vides (hs), le second élévateur (3) étant configuré pour élever la palette vide (5) depuis une hauteur d'alimentation de palettes vides (ha) à la hauteur de fourniture latérale de palettes vides (hs), et le premier élévateur (2) étant configuré pour élever la palette vide (5) depuis la hauteur de fourniture latérale de palettes vides (hs) à la hauteur initiale de chargement de palettes (hi).

2. Dispositif de manipulation de palettes selon la revendication 1, dans lequel le premier élévateur (2) comprend une structure (20) comprenant deux parois (200, 201) l'une en regard de l'autre, une desdites unités de support (21) étant disposée de chaque côté longitudinal desdites parois (200, 201), la surface de support de chacune desdites unités de support (21) étant configurée pour supporter une palette (5) à proximité de chacun de ses angles.

3. Dispositif de manipulation de palettes selon la revendication 1 ou 2, dans lequel chaque unité de support (21) est fixée à une chaîne de transmission respective (22).

4. Dispositif de manipulation de palettes selon la revendication 3, dans lequel chaque chaîne de transmission (22) comprend une poulie d'entraînement supérieure et une poulie d'entraînement inférieure, la poulie d'entraînement inférieure étant disposée à une hauteur telle qu'elle fait que l'unité de support respective (21) soit pivotée lorsqu'elle se déplace sous la hauteur intermédiaire (hm), en permettant de la sorte que la palette (5) soit déplacée vers le bas par le biais du second élévateur (3) depuis ladite hauteur intermédiaire (hm).

5. Dispositif de manipulation de palettes selon l'une quelconque des revendications précédentes, dans lequel le second élévateur (3) est un élévateur conventionnel.

6. Dispositif de manipulation de palettes selon l'une quelconque des revendications précédentes, dans lequel l'unité de déplacement horizontal (4) comprend deux bras (40) disposés parallèles entre eux come une fourche, et configurés pour être introduits dans les ouvertures longitudinales (51) de la palette (5), lesdits bras (40) étant mobiles horizontalement.

7. Appareil de palettisation **caractérisé en ce qu'il** comprend un dispositif de manipulation de palettes (1) selon l'une quelconque des revendications 1 à 6.

8. Appareil de palettisation selon la revendication 7, comprenant des moyens automatiques de positionnement pour positionner des charges sur une palette (5) depuis que ladite palette (5) est à la hauteur initiale de chargement (hi) jusqu'à ce que la palette (5) se déplace vers le bas à la hauteur finale de chargement (hf).

9. Procédé de manipulation de palettes pour charger des palettes le long d'une trajectoire verticale descendante de chargement (Rv) depuis une hauteur initiale de chargement de palettes (hi) à une hauteur finale de chargement de palettes (hf), en étant défini entre ladite hauteur initiale de chargement (hi) et ladite hauteur finale de chargement (hf) une hauteur de fourniture latérale de palettes vides (hs) pour introduire une palette vide (5) dans la trajectoire verticale (Rv), le procédé de manipulation comprenant une première étape de déplacement de la palette (5) vers le bas depuis la hauteur initiale (hi) à une hauteur intermédiaire (hm) par le biais d'un premier élévateur (2), et une seconde étape de déplacement de ladite palette (5) vers le bas depuis la hauteur intermédiaire (hm) à la hauteur finale de chargement (hf) par le biais d'un second élévateur (3), dans lequel le premier élévateur (2) et le second élévateur (3) sont configurés de manière que la palette (5) peut être supportée simultanément sur le premier élévateur (2) et le second élévateur (3) à la hauteur intermédiaire (hm), et de manière qu'une fois supportée sur les deux élévateurs (2, 3), le premier élévateur (2) peut être retirée, en laissant que la palette (5) continuer à se déplacer vers le bas, supportée sur le second élévateur (3), le procédé de manipulation comprenant en outre une étape de fourniture d'une palette vide (5) au premier élévateur (2) à la hauteur de fourniture latérale de palettes vides (hs) depuis une position de stockage horizontal dans un espace de stockage (10) pour stocker une palette vide (5), **caractérisé en ce que** ladite palette vide (5) est fournie au premier élévateur (2) par le biais d'une unité de déplacement horizontal (4), suivie d'une étape successive d'élévation de la palette vide (5) depuis la hauteur de fourniture latérale de palettes vides (hs) à la hauteur initiale de chargement (hi) par le biais du premier élévateur (2), la première étape de déplacement de la palette (5) vers le bas commençant après ladite étape d'élévation, le procédé de manipulation comprenant en outre une étape d'élévation d'une palette vide (5) depuis une hauteur d'alimentation de palettes vides (ha) d'une unité d'alimentation de palettes vides (6) à la hauteur de fourniture latérale de palettes vides (hs) par le biais du second élévateur (3) et une étape successive de déplacement de la palette vide (5) horizontalement à la position de stockage horizontal dans l'espace de stockage (10), les deux étapes étant réalisées de manière simultanée avec au moins une partie de l'étape de fourniture d'une palette vide (5) au premier élévateur (2), l'étape successive d'élévation de la palette vide (5) à la hauteur initiale (hi) et/ou la première étape de déplacement de la palette (5) vers le bas depuis la hauteur initiale (hi).

10. Procédé de manipulation selon la revendication 9, comprenant une étape de déplacement d'une palette chargée (5) vers le bas depuis la hauteur finale de chargement (hf) à la hauteur d'évacuation de palettes (he) par le biais du second élévateur (3).
